# FASCICULE DE BREVET EUROPEEN

(11) **EP 4 311 598 B1**
(45) Date de publication et mention de la délivrance du brevet: **29.05.2024**
(21) Numéro de dépôt: 23186514.8
(22) Date de dépôt: 19.07.2023
(51) Int. Cl.: B01J 19/12, B01J 19/00

(54) **SYSTÈME DE CHAUFFAGE EN FLUX CONTINU DE MOLÉCULES CHIMIQUES POUR DES RÉACTIONS DE CHIMIE ORGANIQUE ET CATALYSE**
SYSTEM ZUR KONTINUIERLICHEN ERWÄRMUNG CHEMISCHER MOLEKÜLE FÜR ORGANISCHE UND KATALYTISCHE CHEMISCHE REAKTIONEN
CONTINUOUS FLOW HEATING SYSTEM OF CHEMICAL MOLECULES FOR ORGANIC CHEMISTRY REACTIONS AND CATALYSIS

(30) Priorité: 29.07.2022 FR 2207840
(43) Date de publication de la demande: 31.01.2024
(73) Titulaire: THALES, 92190 Meudon (FR); Centre National de la Recherche Scientifique, 75016 Paris (FR); Ecole Nationale Superieure de Chimie de Paris, 75005 Paris (FR)
(72) Inventeur: AUVIGNE, Amélie, 94350 VILLIERS-SUR-MARNE (FR); LEN, Christophe, 60150 VILLERS SUR COUDUN (FR); BRECHENMACHER, Arnaud, 78140 VELIZY-VILLACOUBLAY (FR); BARIOU, David, 78140 VELIZY-VILLACOUBLAY (FR)
(74) Mandataire: Atout PI Laplace

(56) Documents cités:
- EP-A1- 0 448 458
- CN-A- 105 859 894
- FR-A1- 3 109 580
- US-A- 5 750 823
- US-A1- 2020 068 672

## Description

L'invention porte sur un système de chauffage en flux continu de molécules chimiques pour des réactions de chimie organique et catalyse.

Le domaine de l'invention concerne le chauffage en flux continu de molécules chimiques pour des réactions de chimie organique et catalyse.

Il est connu des appareils à micro-ondes en flux continu pour la chimie.

Les appareils de chauffage par micro-ondes existent déjà dans le domaine de la chimie à l'échelle laboratoire et sont commercialisés par quelques entreprises telles que SAIREM, CEM, MILESTONE, ANTON PAAR, BIOTAGE. Quelques équipementiers commercialisent également des appareils micro-ondes dédiés à la synthèse organique et catalyse tels que SAIREM.

La synthèse organique et catalyse chimique homogène et hétérogène en flux continu sous chauffage micro-ondes n'a que peu d'appareils dédiés et ces dispositifs ne présentent qu'une seule source de puissance. La source de chauffage est donc globale sur le volume du mélange réactionnel bien que non uniforme.

Il est également connu, des appareils tels que décrits dans les Techniques de l'ingénieur Réf. : J5020 V1 "Micro-ondes en synthèse organique", p.7.

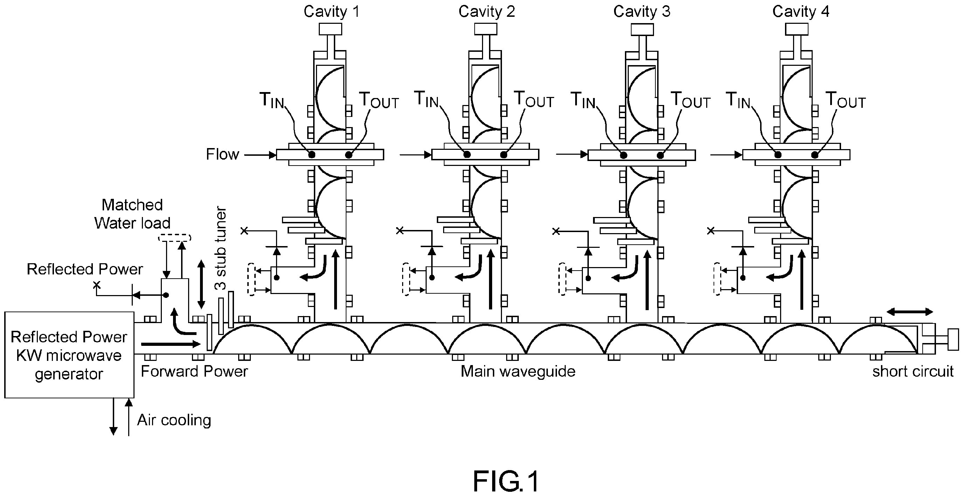

Il est également connu, comme illustré sur la [Fig.1], des appareils à micro-ondes, tels que décrits dans le document "Patil, Narendra G., et al. "Microwave assisted flow synthesis: Coupling of electromagnetic and hydrodynamic phenomena." AlChE Journal 60.11 (2014): 3824-3832.".

Dans un tel système, les voies du guide d'onde ne sont pas indépendantes et l'énergie micro-ondes est distribuée quasi uniformément dans quatre cavités. Un tel système ne permet pas de contrôler la puissance et la température de façon indépendante dans chaque voie, aussi la sélectivité et la conversion des produits ciblés sont limitées.

De plus, les systèmes de chauffage par micro-ondes en flux continu n'ont pas un volume d'interaction avec le milieu réactionnel important à cause de contraintes du dimensionnement du guide (hauteur de 43.18mm pour un guide standard WR340 et faible diamètre de tube car pénétration des micro-ondes faible), ce qui ne permet pas d'effectuer des réactions chimiques avec un débit élevé, aussi la productivité est limitée.

US 5 750 823 A divulgue un système de chauffage en flux continu comprenant plusieurs chauffage à micro-ondes en série.

US 2020/068672 A1 et EP 0 448 458 A1 présentent des système avec un seul module de chauffage où la chambre de réaction est dans le guide d'onde.

FR 3 109 580 A1 décrit des réacteurs à micro-ondes en série.

Un but de l'invention est de pallier les problèmes précédemment cités, et notamment de fournir un équipement permettant d'effectuer des réactions chimiques telles des synthèses organiques sélectives et des catalyses chimiques homogènes et hétérogènes par un contrôle de la température à différents points du (des) réacteur(s) où s'effectue la réaction.

Il est proposé, selon un aspect de l'invention, un système de chauffage en flux continu de molécules chimiques pour des réactions de chimie organique et catalyse comprenant :
- plusieurs modules disposés en série, un module comprenant :
- un tube de circulation traversant un guide d'onde configuré pour chauffer des molécules chimiques , et débouchant sur une enceinte de maintien en température des molécules chimiques, le guide d'onde comprenant une source micro-ondes de puissance générant une puissance incidente, un isolateur protégeant la source micro-ondes de puissance d'une puissance réfléchie, des coupleurs directifs de mesure des puissances incidentes et puissances réfléchies, un dispositif d'adaptation d'impédance, et un court-circuit ;
- un tube de circulation des produits issus de la réaction chimique se déroulant dans l'enceinte de maintien en température ;
- au moins un capteur thermique de mesure de la température dans le tube de circulation entre la sortie du guide d'onde et l'entrée dans l'enceinte de maintien en température ;
- au moins un capteur thermique de mesure de la température dans l'enceinte de maintien en température ; et
- au moins un capteur thermique de mesure de la température dans le tube de circulation en sortie de l'enceinte de maintien en température; et
- une unité de commande électronique du système configurée pour :
- commander les puissances incidentes de chaque guide d'onde émises par chaque source micro-ondes correspondante, et les puissances délivrées par chaque enceinte de maintien en température, en fonction des températures mesurées par les capteurs thermiques et de températures de consignes correspondantes ; et
- recevoir les mesures des puissances incidentes et des puissances réfléchies destinées au réglage des dispositifs d'adaptation d'impédance et des courts-circuits.

Selon un mode de réalisation, l'unité de commande est configurée pour commander le réglage des dispositifs d'adaptation d'impédance à partir des mesures des puissances incidentes et des puissances réfléchies, en minimisant les puissances réfléchies tout en maximisant les puissances incidentes.

Dans un mode de réalisation, l'unité de commande est configurée pour réguler une puissance en fonction d'une température mesurée par un capteur thermique, en utilisant un régulateur configuré pour minimiser un écart à une consigne, tel un régulateur Proportionnel Intégral Dérivé, ou à commande prédictive, ou à commande par retour d'état, ou à commande LQG, ou à commande optimale ou à contrôleur flou.

Dans un mode de réalisation, une enceinte de maintien en température est un four ou une étuve.

Selon un mode de réalisation, un tube de circulation est en verre.

Dans un mode de réalisation, un tube de circulation comprend un élément de blindage magnétique de chaque côté du guide d'onde, pour limiter les pertes de puissance par rayonnement.

Selon un mode de réalisation, un élément de blindage magnétique est métallique.

Dans un mode de réalisation, au moins un module, différent du premier module de la série, comprend une entrée configurée pour ajouter des molécules chimiques dans un tube de circulation.

Selon un mode de réalisation, les dispositifs d'adaptation d'impédance comprennent une boîte d'accord ("tuner" en langue anglaise) ou deux courts-circuits.

L'invention sera mieux comprise à l'étude de quelques modes de réalisation décrits à titre d'exemples nullement limitatifs et illustrés par les dessins annexés sur lesquels les figures :
[Fig.1] illustre schématiquement un système de chauffage de molécules chimiques, selon l'état de l'art ;
[Fig.2] illustre schématiquement un système de chauffage en flux continu de molécules chimiques pour des réactions de chimie organique et catalyse, selon un aspect de l'invention ; et
[Fig.3] illustre schématiquement, l'évolution de la température dans le système, selon un aspect de l'invention.

Sur l'ensemble des figures, les éléments ayant des références identiques sont similaires.

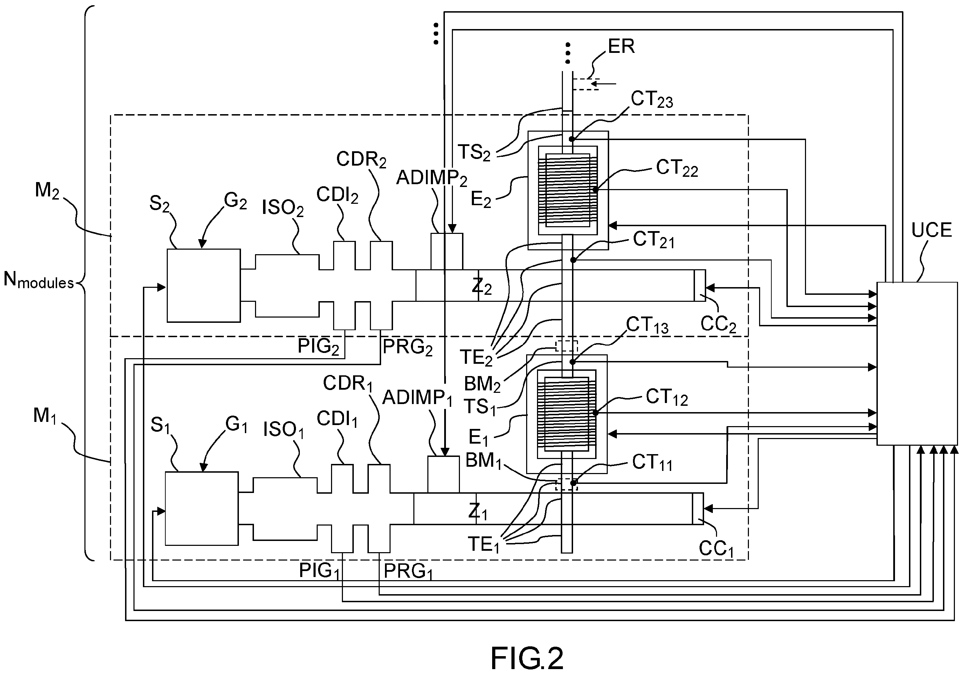

La [Fig.2] représente schématiquement un système de chauffage en flux continu de molécules chimiques pour des réactions de chimie organique et catalyse comprenant :
- plusieurs modules M₁, M₂, ... M_{N}, disposés en série, N ≥ 2, un module Mᵢ comprenant :
- un tube de circulation TEᵢ traversant un guide d'onde Gᵢ configuré pour chauffer des molécules chimiques, et débouchant sur une enceinte Eᵢ de maintien en température des molécules chimiques, le guide d'onde Gᵢ comprenant une source de puissance Si générant une puissance incidente PIGᵢ, un isolateur ISOi protégeant la source de puissance Si d'une puissance réfléchie PRGᵢ, des coupleurs directifs CDIᵢ, CDRᵢ de mesure des puissance incidente PIGᵢ et puissance réfléchie PR, un dispositif d'adaptation d'impédance ADIMPi, et un court-circuit CCᵢ ;
- un tube de circulation TSᵢ des produits issus de la réaction chimique se déroulant dans l'enceinte Eᵢ de maintien en température ;
- au moins un capteur thermique CTᵢ₁ de mesure de la température dans le tube de circulation TEᵢ entre la sortie du guide d'onde Gᵢ et l'entrée dans l'enceinte Eᵢ de maintien en température ;
- au moins un capteur thermique CTᵢ₂ de mesure de la température dans l'enceinte Eᵢ de maintien en température ; et
- au moins un capteur thermique CTᵢ₃ de mesure de la température dans le tube de circulation TSᵢ en sortie de l'enceinte Eᵢ de maintien en température ; et
- une unité de commande électronique UCE du système configurée pour :
- commander les puissances d'alimentation PGᵢ de chaque guide d'onde Gᵢ et les puissances d'alimentation PEi de chaque enceinte Eᵢ de maintien en température, en fonction des températures mesurées par les capteurs thermiques CTᵢ₁, CTᵢ₂, CTᵢ₃ et de températures de consignes correspondantes Tconsᵢ₁, Tconsᵢ₂, Tconsᵢ₃ ; et
- recevoir les mesures des puissances incidentes PIGᵢ et des puissances réfléchies PRGᵢ les destinées à au réglage des dispositifs d'adaptation d'impédance ADIMPi et des courts-circuits CCᵢ.

Une enceinte Eᵢ de maintien en température peut être un four ou une étuve, et un tube de circulation TEᵢ, TSᵢ peut être en verre.

Un tel système permet de contrôler la montée en température en commandant la puissance d'alimentation du guide d'onde Gᵢ en fonction de la température CTᵢ₁ mesurée dans le tube de circulation TEᵢ traversant le guide d'onde Gᵢ, et de la température Tconsᵢ₁ de consigne correspondante. Ce chauffage HF par un guide d'onde Gᵢ permet de monter très vite à la température nécessaire Tconsᵢ₁ pour que la réaction se fasse.

Un tel système permet de rester à une température bien définie Tconsᵢ₁ à la sortie du chauffage HF par le guide d'onde Gᵢ, grâce à l'enceinte Eᵢ de maintien en température, par exemple avec un système thermostaté et isolé de l'extérieur, sur un volume défini (et modulable) de réacteur. Ce maintien en température, à la température de consigne Tconsᵢ₂ permet de maximiser la conversion en produit souhaité en augmentant le temps de séjour du mélange réactionnel dans l'enceinte Eᵢ. De plus, un tel volume permet de travailler avec des débits plus importants que dans l'état de l'art, et par conséquent d'augmenter la productivité.

En cas d'utilisation de plusieurs capteurs thermiques pour mesurer une même température, la température de consigne peut s'appliquer à une moyenne pondérée de ces mesures. Les températures de consigne dépendent des réactions chimiques effectuées et des résultats souhaités.

L'unité de commande (UCE) peut être configurée pour réguler une puissance PGᵢ, PEi en fonction d'une température mesurée par un capteur thermique (CTᵢ₁, CTᵢ₂, CTᵢ₃), en utilisant un régulateur Proportionnel Intégral Dérivé.

Différents points de mesures de la température sont intégrés aux modules du système, avec a minima, par module, un point de mesure CTᵢ₁ en sortie de guide d'onde Gᵢ, un point de mesure CTᵢ₂ dans l'enceinte Eᵢ de maintien en température et un point de mesure CTᵢ₃ en sortie de l'enceinte Eᵢ de maintien en température (correspondant à l'entrée du guide d'onde du module suivant ou à la sortie des produits finals du système).

L'asservissement puissance/température pour la partie au niveau du guide d'onde Gᵢ se fait par la mesure de la température en sortie de guide d'onde Gᵢ : c'est cette mesure de la température qui détermine la commande de puissance du guide d'onde. L'enceinte Eᵢ de maintien en température dispose également d'un dispositif d'asservissement en température indépendant.

L'asservissement puissance/température pour la partie au niveau de l'enceinte Eᵢ de maintien en température se fait par la mesure de la température en entrée et/ou à l'intérieur et/ou en sortie de guide d'onde Gᵢ : c'est cette mesure de la température qui détermine la commande de puissance du guide d'onde Gᵢ.

Le principe de ces asservissements peut être basé sur un régulateur configuré pour minimiser un écart à une consigne, tel un régulateur PID (Proportionnel, Intégral, Dérivé). En variante, un régulateur à commande prédictive, ou à commande par retour d'état, ou à commande LQG, ou à commande optimale ou à contrôleur flou peut être utilisé. En l'espèce, il y a un régulateur PID par guide d'onde Gᵢ et par enceinte Eᵢ de maintien en température. L'asservissement peut se faire sur la température. Une référence de de température est sélectionnée par l'opérateur de la machine, en fonction de la réaction chimique et des résultats souhaités. Elle est comparée à la mesure de température. L'erreur sera envoyée au PID qui recalcule la nouvelle commande de puissance du guide d'onde. Les paramètres du PID sont calculés pour atteindre la valeur demandée en assurant la stabilité du système d'asservissement. Cet asservissement est en l'espèce numérique, des convertisseurs analogiques numériques (CAN) et numériques analogiques (CNA) assurent la conversion des signaux et le traitement comparaison et PID se fait par logiciel dans un microcontrôleur ou FPGA. En variante, l'asservissement peut être réalisé sous forme analogique.

Ces différentes régulations peuvent se faire avec des régulations basées sur une pluralité de mesures par plusieurs capteurs thermiques, auquel cas la régulation peut se faire sur une moyenne, une moyenne pondérée ou une autre fonction de ces multiples mesures.

Au moins un module M_{K}, avec 2 ≤ K ≤ N, i.e. différent du premier module M₁ de la série de modules M₁, M₂, ... M_{N}, comprend une entrée ER configurée pour ajouter des réactifs dans un tube de circulation (TEᵢ, TSᵢ).

Quelle que soit la source de chauffage micro-ondes Gᵢ et la source de maintien en température Eᵢ, ce système permet de contrôler les paramètres du chauffage et d'appliquer la bonne puissance en fonction de la température à atteindre, en fonction du débit d'entrée et des propriétés intrinsèques des éléments constitutifs de la réaction chimique et de la catalyse chimique homogène et hétérogène et de permettre un maintien en température sur un volume correspondant à un temps de séjour nécessaire pour que ladite réaction se fasse avec une conversion, un rendement et une sélectivité optimaux.

Une réaction modèle est l'oligomérisation du glycérol, où le contrôle de température sur chacun des n niveaux va permettre de contrôler la sélectivité de l'oligomère souhaité et maximiser la conversion du glycérol en cet oligomère :

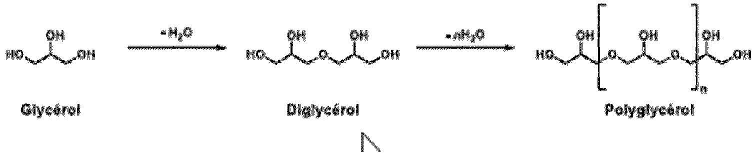

Un dispositif d'adaptation ADIMPᵢ (comprenant par exemple un coupleur ou T hybride et deux courts-circuits, ou, en variante un tuner) et un court-circuit CCᵢ permettent d'adapter l'impédance du système de sorte que la puissance absorbée par le fluide soit maximale. Ce dispositif d'adaptation est nécessaire car la nature du milieu change à cause de la réaction chimique, les produits issus de la réaction ayant des propriétés diélectriques différentes.

l'unité de commande UCE est configurée pour commander le réglage des dispositifs d'adaptation d'impédance ADIMPᵢ et des courts-circuits CCᵢ à partir des mesures des puissances incidentes PIGᵢ et des puissances réfléchies PRGᵢ, en minimisant les puissances réfléchies PRGᵢ tout en maximisant les puissances incidentes PIGᵢ.

Un tube de circulation TEᵢ, TSᵢ peut comprendre un élément de blindage électromagnétique BMᵢ, de chaque côté du guide d'onde Gᵢ. Le piège à onde ou blindage magnétique BMᵢ protège l'utilisateur d'éventuelles fuites électromagnétiques et est dimensionné de sorte qu'il n'y ait pas de propagation dans le mélange réactionnel du réacteur en verre lorsque le système arrive dans l'enceinte de maintien en température Eᵢ.

Un exemple de réalisation utilise une ou plusieurs sources de puissance hyperfréquence de 1kW à 2,5GHz (par exemple). Ce signal est injecté par une transition coaxiale dans un guide rectangulaire. Un isolateur ou circulateur est utilisé pour protéger l'amplificateur des ondes réfléchies par le dispositif à chauffer. Des coupleurs directifs permettent de mesurer l'onde incidente et l'onde réfléchie. Un coupleur hybride associé à des courts-circuits réglables permettent d'optimiser le transfert de puissance dans les réactifs par chauffage micro-onde.

Le guide d'onde Gᵢ d'un module Mᵢ est percé d'un trou dans lequel on ajoute un tube de circulation en verre (deux parties entrée TEᵢ et sortie TSᵢ) permettant de faire transiter les réactifs à chauffer. Dans ce guide Gᵢ la température des réactifs est augmentée très rapidement.

En complément du contrôle de la puissance et de la température, il est important de contrôler le transfert d'énergie au réactif à chauffer. Pour cela on utilise deux réglages qui peuvent être soit manuels soit automatiques (régulateur).

Dans le guide d'onde Gᵢ qui assure le transfert de l'énergie électromagnétique en énergie thermique il y a quatre types de puissance : la puissance incidente PIGᵢ qui provient de la source Sᵢ, la puissance absorbée PAGᵢ qui est absorbée par les réactifs, la puissance réfléchie PRGᵢ, qui est renvoyée par le guide d'onde Gᵢ, et la puissance perdue PPGᵢ, qui s'échappe du guide d'onde Gᵢ par rayonnement ou par pertes dans le guide d'onde Gᵢ.

Pour la puissance perdue PPGᵢ, il a été ajouté un piège à ondes ou élément de blindage magnétique BMᵢ de chaque côté du guide d'onde Gᵢ pour limiter les pertes par rayonnement ; les interfaces du guide d'onde Gᵢ sont également ajustées pour minimiser les pertes.

Concernant la puissance absorbée PAGᵢ, le réglage du court-circuit CCᵢ permet de maximiser le champ électrique dans la solution à chauffer. A cette fin, il faut le régler pour obtenir le maximum de l'onde stationnaire dans l'axe du tube longitudinal du tube de circulation TEᵢ, TSᵢ. Ce réglage se fait en ajustant le court-circuit pour que la puissance réfléchie PRGᵢ soit minimale.

Concernant la puissance réfléchie PRGᵢ, l'impédance à l'entrée du guide d'onde Gᵢ dépend de l'impédance des réactifs et de la longueur de la ligne. Si l'impédance n'est pas adaptée à l'impédance de la source Sᵢ, il y a une puissance réfléchie PRGᵢ, qui est absorbée dans la charge de l'isolateur ISOᵢ et donc perdue.

Pour éviter cette perte, est ajouté le dispositif d'adaptation d'impédance ADIMPᵢ qui permet de passer d'une impédance Z à l'impédance de la source Z0. Ce dispositif d'adaptation d'impédance ADIMPᵢ peut être réalisé avec une boîte d'accord (tuner à plongeurs) ou avec un T hybride et deux courts-circuits.). Les ajustements sont faits pour à la fois minimiser les puissances réfléchies PRGᵢ et maximiser les puissances incidentes PIGᵢ.

Tous cela peut fonctionner avec des ajustements manuels si l'impédance des réactifs est indépendante de la température. Cependant, ce n'est généralement pas le cas. Aussi, une deuxième boucle de régulation est ajoutée, basée par exemple sur un PID, pour minimiser pendant toute la phase de réaction la puissance réfléchie PRGi.

La présente invention permet donc d'ajuster la température de réaction et de maximiser le transfert d'énergie pendant toute la phase de réaction.

### Ce dispositif est réalisé sur les N modules

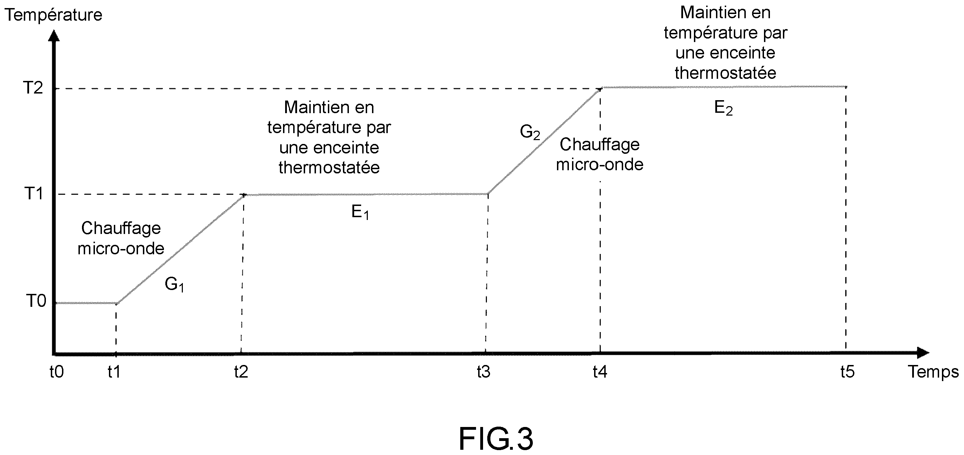

La [Fig.3] représente l'évolution de la température dans le système au cours de la circulation des réactifs et des réactions. L'exemple décrit ne comprend que deux modules (N=2), mais n'est aucunement limitatif.

Dans le premier module M₁, les réactifs de la première réaction chimique sont introduits à l'instant t₀ à la température T₀, et à l'instant t₁, la solution traverse le guide d'onde G₁, et est rapidement chauffée de l'instant t₁ à l'instant t₂, pour passer très vite de la température T₀ à une température T₁.

Ensuite, le milieu réactionnel entre dans l'enceinte E₁ de maintien en température, telle une étuve thermostatée ou un four thermostaté, pour le maintenir à une température constante, en l'espèce T₁, pour que la réaction chimique souhaitée puisse se faire. Le tube de circulation qui passe dans l'enceinte E₁ de maintien en température garde le milieu réactionnel dans l'enceinte E₁ entre l'instant d'entrée t₂ et l'instant de sortie t₃. Le réacteur ou tube de circulation passant dans l'enceinte E1 doit être de volume adapté à la réaction chimique. Ainsi on adapte le volume de ce réacteur en fonction de la réaction chimique (par la géométrie du réacteur serpentin, tube droit... mais aussi pourquoi pas en augmentant ou diminuant le diamètre du réacteur en verre).

L'opération est ensuite reproduite, dans le deuxième module M₂, avec une autre température T₂, différente ou non de T1 ,obtenue par chauffage micro-ondes lors de la traversée du deuxième guide d'onde G₂, entre les instants t₃ et t₄; température pouvant être inférieure, égale ou supérieure à T1, selon la réaction chimique suivante souhaitée.

Ensuite, le milieu réactionnel entre dans l'enceinte E₂ de maintien en température, telle une étuve thermostatée ou un four thermostaté, pour le maintenir à une température constante, en l'espèce T₂, pour que la réaction chimique souhaitée puisse se faire. Le tube de circulation qui passe dans l'enceinte E₂ de maintien en température peut être allongé par une forme en serpentin car le temps de séjour dans l'enceinte E₂, entre l'instant d'entrée t₄ dans l'enceinte E₁ et l'instant de sortie t₅ de l'enceinte E₂, doit être beaucoup plus long que le temps de montée rapide en température lors de la traversée du guide d'onde G₂.

## Revendications

1. Système de chauffage en flux continu de molécules chimiques pour des réactions de chimie organique et catalyse comprenant :
- plusieurs modules (M₁, M₂, ... M_{N}, N ≥ 2), disposés en série, un module (Mᵢ) comprenant :
- un tube de circulation (TEᵢ) traversant un guide d'onde (Gᵢ) configuré pour chauffer des molécules chimiques , et débouchant sur une enceinte (Eᵢ) de maintien en température des molécules chimiques, le guide d'onde (Gᵢ) comprenant une source micro-ondes de puissance (Sᵢ) générant une puissance incidente (PIGᵢ), un isolateur (ISOᵢ) protégeant la source micro-ondes de puissance (Sᵢ) d'une puissance réfléchie (PRGᵢ), des coupleurs directifs (CDIᵢ, CDRᵢ) de mesure des puissances incidentes (PIGᵢ) et puissances réfléchies (PR), un dispositif d'adaptation d'impédance (ADIMPᵢ), et un court-circuit (CCᵢ) ;
- un tube de circulation (TSᵢ) des produits issus de la réaction chimique se déroulant dans l'enceinte (Eᵢ) de maintien en température ;
- au moins un capteur thermique (CTᵢ₁) de mesure de la température dans le tube de circulation (TEᵢ) entre la sortie du guide d'onde (Gᵢ) et l'entrée dans l'enceinte (Eᵢ) de maintien en température ;
- au moins un capteur thermique (CTᵢ₂) de mesure de la température dans l'enceinte (Eᵢ) de maintien en température ; et
- au moins un capteur thermique (CTᵢ₃) de mesure de la température dans le tube de circulation (TSᵢ) en sortie de l'enceinte (Eᵢ) de maintien en température ; et
- une unité de commande électronique (UCE) du système configurée pour :
- commander les puissances incidentes (PIGᵢ) de chaque guide d'onde (Gᵢ) émises par chaque source micro-ondes correspondante (Si), et les puissances délivrées (PEi) par chaque enceinte (Eᵢ) de maintien en température, en fonction des températures mesurées par les capteurs thermiques (CTᵢ₁, CTᵢ₂, CTᵢ₃) et de températures de consignes correspondantes (Tconsᵢ₁, Tconsᵢ₂, Tconsᵢ₃) ; et
- recevoir les mesures des puissances incidentes (PIGᵢ) et des puissances réfléchies (PRGᵢ) destinées au réglage des dispositifs d'adaptation d'impédance (ADIMPi) et des courts-circuits (CCᵢ).

2. Système selon la revendication 1, dans lequel l'unité de commande (UCE) est configurée pour commander le réglage des dispositifs d'adaptation d'impédance (ADIMPi) et des courts-circuits (CCᵢ) à partir des mesures des puissances incidentes (PIGᵢ) et des puissances réfléchies (PRGᵢ), en minimisant les puissances réfléchies (PRGᵢ) tout en maximisant les puissances incidentes (PIGᵢ).

3. Système selon l'une des revendications précédentes, dans lequel l'unité de commande (UCE) est configurée pour réguler une puissance (PGᵢ, PEi) en fonction d'une température mesurée par un capteur thermique (CTᵢ₁, CTᵢ₂, CTᵢ₃), en utilisant un régulateur configuré pour minimiser un écart à une consigne (Tconsᵢ₁, Tconsᵢ₂, Tconsᵢ₃), tel un régulateur Proportionnel Intégral Dérivé, ou à commande prédictive, ou à commande par retour d'état, ou à commande LQG, ou à commande optimale ou à contrôleur flou.

4. Système selon l'une des revendications précédentes, dans lequel l'enceinte (Eᵢ) de maintien en température est un four ou une étuve.

5. Système selon l'une des revendications précédentes, dans lequel le tube de circulation (TEᵢ, TSᵢ) est en verre.

6. Système selon l'une des revendications précédentes, dans lequel le tube de circulation (TEᵢ, TSᵢ) comprend un élément de blindage électromagnétique (BMᵢ) de chaque côté du guide d'onde (Gᵢ), pour limiter les pertes de puissance par rayonnement.

7. Système selon la revendication 6, dans lequel l'élément de blindage électromagnétique (BM1, BM2) est métallique.

8. Système selon l'une des revendications précédentes, dans lequel au moins un module (M_{K}, 2 ≤ K ≤ N), différent du premier module (M₁) de la série, comprend une entrée (ER) configurée pour ajouter des réactifs dans un tube de circulation.

9. Système selon l'une des revendications précédentes, dans lequel les dispositifs d'adaptation d'impédance (ADIMPᵢ) comprennent une boîte d'accord ou deux coupe-circuits.

## Patentansprüche

1. System zur kontinuierlichen Erwärmung von chemischen Molekülen für Reaktionen in der organischen Chemie und Katalyse, Folgendes umfassend:
- mehrere Module (M₁, M₂, ...M_{N}, N ≥ 2), die in Reihe angeordnet sind, wobei ein Modul (Mᵢ) Folgendes umfasst:
- ein Zirkulationsrohr (TEᵢ), das einen Wellenleiter (Gᵢ) durchquert, der so konfiguriert ist, dass er chemische Moleküle erwärmt, und in eine Einhausung (Eᵢ) zur Temperaturhaltung der chemischen Moleküle mündet, wobei der Wellenleiter (Gᵢ) eine Mikrowellenleistungsquelle (Sᵢ) umfasst, die eine einfallende Leistung (PIGᵢ) erzeugt, einen Isolator (ISOᵢ), der die Mikrowellenleistungsquelle (Sᵢ) vor einer reflektierten Leistung (PRGᵢ) schützt, Richtkoppler (CDIᵢ, CDRᵢ) zur Messung der einfallenden Leistungen (PIGᵢ) und der reflektierten Leistungen (PR), eine Impedanzanpassungsvorrichtung (ADIMPᵢ) und einen Kurzschluss (CCᵢ);
- ein Zirkulationsrohr (TSᵢ) für die Produkte aus der chemischen Reaktion, die in der Einhausung (Eᵢ) zur Temperaturhaltung abläuft;
- mindestens einen Wärmesensor (CTᵢ₁) zur Messung der Temperatur in dem Zirkulationsrohr (TEᵢ) zwischen dem Ausgang des Wellenleiters (Gᵢ) und dem Eingang in der Einhausung (Eᵢ) zur Temperaturhaltung;
- mindestens einen Wärmesensor (CTᵢ₂) zur Messung der Temperatur in der Einhausung (Eᵢ) zur Temperaturhaltung; und
- mindestens einen Wärmesensor (CTᵢ₃) zur Messung der Temperatur in dem Zirkulationsrohr (TSᵢ) am Ausgang der Einhausung (Eᵢ) zur Temperaturhaltung; und
- eine elektronische Steuereinheit (UCE) des Systems, die zu Folgendem konfiguriert ist:
- Steuern der einfallenden Leistungen (PIGᵢ) jedes Wellenleiters (Gᵢ), die von jeder entsprechenden Mikrowellenquelle (Sᵢ) ausgesendet werden, und der von jeder Einhausung (Eᵢ) zur Temperaturhaltung gelieferten Leistungen (PEᵢ) in Abhängigkeit von den durch die Wärmesensoren (CTᵢ₁, CTᵢ₂, CTᵢ₃) gemessenen Temperaturen und von entsprechenden Solltemperaturen (Tconsᵢ₁, Tconsᵢ₂, Tconsᵢ₃); und
- Empfangen der Messungen der einfallenden Leistungen (PIGᵢ) und der reflektierten Leistungen, (PRGᵢ), die für die Einstellung der Impedanzanpassungsvorrichtungen (ADIMPᵢ) und der Kurzschlüsse (CCᵢ) bestimmt sind.

2. System nach Anspruch 1, wobei die Steuereinheit (UCE) so konfiguriert ist, dass sie die Einstellung der Impedanzanpassungsvorrichtungen (ADIMPᵢ) und der Kurzschlüsse (CCᵢ) anhand der Messungen der einfallenden Leistungen (PIGᵢ) und der reflektierten Leistungen (PRGᵢ) steuert, während die reflektierten Leistungen (PRGᵢ) minimiert und gleichzeitig die einfallenden Leistungen (PIGᵢ) maximiert werden.

3. System nach einem der vorhergehenden Ansprüche, wobei die Steuereinheit (UCE) so konfiguriert ist, dass sie eine Leistung (PGᵢ, PEᵢ) in Abhängigkeit von einer Temperatur, die von einem Wärmesensor (CTᵢ₁, CTᵢ₂, CTᵢ₃) gemessen wird, regelt, unter Verwendung eines Reglers, der so konfiguriert ist, dass er eine Abweichung von einem Sollwert (Tconsᵢ₁, Tconsᵢ₂, Tconsᵢ₃) minimiert, wie etwa ein Proportional-Integral-Differenzial-Regler, oder ein Regler mit prädiktiver Steuerung, oder ein Regler mit Zustandsrückmeldungssteuerung, oder ein Regler mit LQG-Steuerung, oder ein Regler mit optimaler Steuerung, oder ein Regler mit Fuzzy-Controller.

4. System nach einem der vorhergehenden Ansprüche, wobei die Einhausung (Eᵢ) zur Temperaturhaltung ein Ofen oder ein Trockenschrank ist.

5. System nach einem der vorhergehenden Ansprüche, wobei das Zirkulationsrohr (TEᵢ, TSᵢ) aus Glas besteht.

6. System nach einem der vorhergehenden Ansprüche, wobei das Zirkulationsrohr (TEᵢ, TSᵢ) ein elektromagnetisches Abschirmelement (BMᵢ) auf jeder Seite des Wellenleiters (Gᵢ) umfasst, um die Leistungsverluste durch Strahlung zu begrenzen.

7. System nach Anspruch 6, wobei das elektromagnetische Abschirmelement (BM1, BM2) aus Metall besteht.

8. System nach einem der vorhergehenden Ansprüche, wobei mindestens ein Modul (M_{K}, 2 ≤ K ≤N), das sich von dem ersten Modul (M₁) der Reihe unterscheidet, einen Einlass (ER) umfasst, der zum Hinzufügen von Reagenzien in ein Zirkulationsrohr konfiguriert ist.

9. System nach einem der vorhergehenden Ansprüche, wobei die Impedanzanpassungsvorrichtungen (ADIMPᵢ) eine Abstimmvorrichtung oder zwei Stromkreisunterbrecher umfassen.

## Claims

1. A continuous flow heating system for heating chemical molecules for organic chemistry reactions and catalysis comprising:
- several modules (M₁, M₂, ...M_{N}, N ≥ 2), disposed in series, with a module (Mᵢ) comprising:
- a circulation tube (TEᵢ) passing through a waveguide (Gᵢ) configured to heat chemical molecules, and emerging into a temperature-maintaining enclosure (Eᵢ) of the chemical molecules, the waveguide (Gᵢ) comprising a microwave power source (Sᵢ) generating incident power (PIGᵢ), an isolator (ISOᵢ) protecting the microwave power source (Sᵢ) from reflected power (PRGᵢ), directional couplers (CDIᵢ, CDRᵢ) for measuring incident power (PIGᵢ) and reflected power (PR), an impedance matching device (ADIMPᵢ), and a short-circuit (CCᵢ);
- a circulation tube (TSᵢ) for circulating the products derived from the chemical reaction occurring in the temperature-maintaining enclosure (Eᵢ);
- at least one thermal sensor (CTᵢ₁) for measuring the temperature in the circulation tube (TEᵢ) between the outlet of the waveguide (Gᵢ) and the inlet into the temperature-maintaining enclosure (Eᵢ);
- at least one thermal sensor (CTᵢ₂) for measuring the temperature in the temperature-maintaining enclosure (Eᵢ); and
- at least one thermal sensor (CTᵢ₃) for measuring the temperature in the circulation tube (TSᵢ) at the outlet of the temperature-maintaining enclosure (Eᵢ); and
- an electronic control unit (UCE) of the system configured to:
- control the incident power (PIGᵢ) of each waveguide (Gᵢ) emitted by each corresponding microwave source (Sᵢ), and the power (PEᵢ) delivered by each temperature-maintaining enclosure (Eᵢ), as a function of the temperatures measured by the thermal sensors (CTᵢ₁, CTᵢ₂, CTᵢ₃) and corresponding setpoint temperatures (Tconsᵢ₁, Tconsᵢ₂, Tconsᵢ₃); and
- receive the incident power (PIGᵢ) and reflected power (PRGᵢ) measurements intended for setting the impedance matching devices (ADIMPᵢ) and the short-circuits (CCᵢ).

2. The system according to claim 1, wherein the control unit (UCE) is configured to control the setting of the impedance matching devices (ADIMPᵢ) and of the short-circuits (CCᵢ) based on measurements of the incident power (PIGᵢ) and of the reflected power (PRGᵢ), by minimising the reflected power (PRGᵢ) while maximising the incident power (PIGᵢ).

3. The system according to any of the preceding claims, wherein the control unit (UCE) is configured to regulate a power (PGᵢ, PEᵢ) as a function of a temperature measured by a thermal sensor (CTᵢ₁, CTᵢ₂, CTᵢ₃), using a regulator, such as a Proportional Integral Derivative regulator, or a predictive control regulator, or a state feedback control regulator, or an LQG control regulator, or an optimal control regulator or a fuzzy controller regulator, configured to minimise a deviation from a setpoint (Tconsn, Tconsᵢ₂, Tconsᵢ₃).

4. The system according to any of the preceding claims, wherein the temperature-maintaining enclosure (Eᵢ) is an oven or a drying oven.

5. The system according to any of the preceding claims, wherein the circulation tube (TEᵢ, TSᵢ) is made of glass.

6. The system according to any of the preceding claims, wherein the circulation tube (TEᵢ, TSᵢ) comprises an electromagnetic shielding element (BMᵢ) on each side of the waveguide (Gᵢ) for limiting the power losses due to radiation.

7. The system according to claim 6, wherein the electromagnetic shielding element (BM1, BM2) is metal.

8. The system according to any of the preceding claims, wherein at least one module (M_{K}, 2 ≤ K ≤ N), different from the first module (M₁) of the series, comprises an inlet (ER) configured to add reagents into a circulation tube.

9. The system according to any of the preceding claims, wherein the impedance matching devices (ADIMPᵢ) comprise a tuner or two circuits breakers.
